# EUROPÄISCHE PATENTSCHRIFT

(11) **EP 2 751 440 B1**
(45) Veröffentlichungstag und Bekanntmachung des Hinweises auf die Patenterteilung: **12.10.2016**
(21) Anmeldenummer: 12748428.5
(22) Anmeldetag: 14.08.2012
(51) Int. Cl.: F16D 55/226, F16D 65/18, F16D 65/56

(54) **SCHEIBENBREMSE FÜR EIN NUTZFAHRZEUG**
DISC BRAKE FOR A COMMERCIAL VEHICLE
FREIN À DISQUE POUR UN VÉHICULE UTILITAIRE

(30) Priorität: 02.09.2011 DE 102011112360
(43) Veröffentlichungstag der Anmeldung: 09.07.2014
(73) Patentinhaber: KNORR-BREMSE Systeme für Nutzfahrzeuge GmbH, 80809 München (DE)
(72) Erfinder: GRUBER, Markus, 85560 Ebersberg (DE); WEBER, Ralf, 80992 München (DE); KLINGNER, Matthias, 82272 Moorenweis (DE)
(86) Internationale Anmeldenummer: PCT/EP2012/065853
(87) Internationale Veröffentlichungsnummer: WO 2013/029983

(56) Entgegenhaltungen:
- EP-A1- 0 852 301
- EP-A1- 2 557 331
- WO-A1-97/01044
- DE-A1- 4 020 189
- DE-U1- 9 422 342

## Beschreibung

Die Erfindung betrifft eine Scheibenbremse für ein Nutzfahrzeug nach dem Oberbegriff des Anspruchs 1.

Bei einer gattungsgemäßen Scheibenbremse, wie sie beispielsweise aus der DE 94 22 342 U1 bekannt ist, wirkt ein Bremshebel auf eine in einem Bremssattel positionierte Brücke ein, in der zwei Stellspindeln gelagert sind, die jeweils ein Druckstück zur Aufnahme eines aus einer Belagträgerplatte und einem daran befestigten Reibbelag bestehenden Bremsbelags aufweisen, der bei einer Bremsung an eine Bremsscheibe angedrückt wird. Die beiden Stellspindeln sind mit einem Außengewinde versehen und jeweils in eine Gewindebohrung der Brücke eingeschraubt.

Mittels einer Nachstelleinrichtung, die einer der Stellspindeln zugeordnet ist, wird durch deren Verdrehen bei Verschleiß des Reibbelages der Bremsbelag in Richtung der Bremsscheibe so weit zugestellt, dass ein Lüftspiel zwischen dem Bremsbelag und der Bremsscheibe im Wesentlichen immer konstant gehalten wird.

Aus Sicherheitsgründen soll der Reibbelag eine Mindestdicke nicht unterschreiten, wozu quasi als Alarmgeber ein sogenannter Verschleißsensor in den Reibbelag eingebettet ist, bei dessen Kontaktierung mit der Bremsscheibe ein entsprechendes Signal ausgelöst wird. Dabei ist der Verschleißsensor so positioniert, dass eine minimale Reibbelagdicke verbleibt.

In der Praxis ergeben sich jedoch häufig Probleme dadurch, dass solche Signale missachtet werden und das Fahrzeug weiter benutzt wird, so dass der Reibbelag über das maximal zulässige Maß hinaus abgetragen wird.

Konstruktionsbedingt sind die in der Brücke geführten und relativ dazu axial verstellbaren Stellspindeln in ihrer Länge begrenzt, so dass sie bei einem weiteren Zustellen aus der Verbindung mit der Brücke herausgedreht werden. Damit können die Stellspindeln die eigentliche Bremsfunktion, nämlich die Übertragung der Bremskraft auf den Bremsbelag nicht mehr erfüllen, was letztendlich zu einem Totalausfall der Scheibenbremse führt.

Die geschilderten Probleme ergeben sich nicht nur bei einer Ignoranz von Alarmsignalen, sondern auch bei Ausfall der Signalgeber, also des genannten Verschleißsensors.

Der Erfindung liegt die Aufgabe zugrunde, eine Scheibenbremse der gattungsgemäßen Art so weiterzuentwickeln, dass mit geringen konstruktiven und fertigungstechnischem Aufwand ihre Betriebssicherheit verbessert wird.

Diese Aufgabe wird durch eine Scheibenbremse mit den Merkmalen des Anspruchs 1 gelöst.

Eine im Sinne der Erfindung ausgebildete Scheibenbremse bietet die Gewähr dafür, dass die Stellspindel, aus welchem Grund auch immer, aus der Brücke herausgedreht wird.

Hierzu bildet die in ihrer Länge begrenzte Axialnut, die außenseitig in die Stellspindel eingebracht ist, in Korrespondenz mit einem gegenüber der Brücke axial festgesetzten eingreifenden Anschlag eine Verliersicherung.

Dieser Anschlag, der auf der dem Bremsbelag zugewandten Seite der Brücke angeordnet ist, kann durch ein unterschiedlich gestaltetes Formschlusselement gebildet werden. Beispielhaft sei hier eine Passfeder genannt oder eine Kugel, die an einem geeigneten Bauteil der Nachstelleinrichtung festgelegt sind.

Das Bauteil wird bevorzugt aus einem Treibrad gebildet, das axial gesichert, jedoch verdrehbar am Bremssattel gehalten ist und zwar auf dessen dem Bremsbelag zugewandten Seite.

Dabei ist das Treibrad bevorzugt Bestandteil einer Synchroneinrichtung, die dann zum Einsatz kommt, wenn zwei parallel und abständig zueinander angeordnete Stellspindeln vorgesehen sind, die gleichmäßig, d.h. synchron verstellt werden sollen.

In diesem Fall sind beide Stellspindeln jeweils mit einem Treibrad bestückt und durch ein Zugmittel, beispielsweise eine Gliederkette oder einen Zahnriemen, miteinander verbunden, wobei dann die Treibräder mit entsprechenden Zähnen ausgestattet sind.

Der mit der Axialnut in Eingriff stehende Anschlag erfüllt dabei nicht nur die Anschlagfunktion, sondern auch die Funktion eines Mitnehmers zur Drehmomentenübertragung, mit dem die zur Nachstellung erforderliche Kraft von einer Stellspindel auf die andere übertragen wird.

Nach einem weiteren Gedanken der Erfindung ist vorgesehen, die Länge der Axialnut so zu bemessen, dass die Stellspindel nur bis zum Erreichen einer vorgegebenen Minimaldicke des Reibbelages herausdrehbar ist, wenn dieser an der Bremsscheibe zur Anlage kommt. Damit wird in Kombination mit einem Verschleißsensor eine die Betriebssicherheit wesentlich verbessernde Redundanz geschaffen.

Bemerkenswert ist im Übrigen noch, dass die Erfindung mit geringem Aufwand zu realisieren ist, im Grunde sogar kostenneutral, wenn der Anschlag integraler Bestandteil der Synchronisiereinrichtung ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer erfindungsgemäßen Scheibenbremse in einer Explosionsdarstellung
- Figur 2: einen Schnitt durch den montierten Teil der Scheibenbremse gemäß der Linie II-II in Figur 1.

In den Figuren ist als ein Teil einer Zuspanneinrichtung einer Scheibenbremse für ein Nutzfahrzeug eine Brücke 1 dargestellt, die in einem Bremssattel der Scheibenbremse positionierbar ist und mit der Bremsbeläge an eine Bremsscheibe pressbar sind.

Hierzu sind zwei parallel und abständig zueinander angeordnete Stellspindeln 3 in der Brücke 1 gehalten, an deren einem Ende Druckstücke gelagert sind, über die bei einer Verschiebung der Zuspanneinrichtung die Bremsbeläge an die Bremsscheibe gepresst werden.

Über eine im Bremssattel positionierte Nachstelleinrichtung ist eine axiale Verstellung der Stellspindeln 3 zum Ausgleich einer verschleißbedingten Änderung eines Lüftspiels zwischen dem Bremsbelag und der Bremsscheibe möglich.

Hierzu sind die Stellspindeln 3 und die zugeordneten Bohrungen der Brücke 1 mit ineinander greifenden Gewinden 5 versehen, so dass bei Betätigung der Nachstelleinrichtung durch Verdrehen der Stellspindeln 3 diese axial in Richtung des Bremsbelages bewegt werden.

Um eine gleichmäßige Verstellung beider Stellspindeln 3 zu gewährleisten, ist eine Synchronisiereinrichtung 2 vorgesehen, mit einem Zugmitteltrieb, bestehend aus zwei Treibrädern 6 und einem Zugmittel 7, wobei an jeder Stellspindel 3 ein Treibrad 6 verdrehsicher und an einer Lagerstelle der Brücke 1 axial gesichert, jedoch verdrehbar gehalten ist.

Die Treibräder 6 sind auf der dem Bremsbelag zugewandten Seite der Brücke 1 angeordnet, mit einer Verschlussplatte 4, die das Innere des Bremssattels im Durchtrittsbereich der Stellspindeln 3 verschließt. Zur Abdichtung des Durchtrittsbereichs ist mit der Verschlussplatte 4 ein Balg 19 verbunden, der mit einer Dichtfläche an der Stellspindel 3 anliegt und der gegenüber dem Treibrad 6 eine Dichtung 14 trägt, mit angeformten Zungen 20.

Gemäß der Erfindung weist jede der Stellspindeln 3 außenseitig Axialnuten 11 auf, die in Richtung der Zuspanneinrichtung in ihrer Länge begrenzt sind und in die ein gegenüber der Brücke axial festgesetzter Anschlag 10 eingreift.

Im Beispiel besteht der Anschlag 10 aus einer Kugel, die frei drehbar im Treibrad 6 sowie in der Axialnut 11 gehalten ist. Bei der dargestellten Ausführungsvariante sind in jeder Stellspindel 3 drei Axialnuten 11 vorgesehen, die in einem Winkel von 120° zueinander versetzt angeordnet sind.

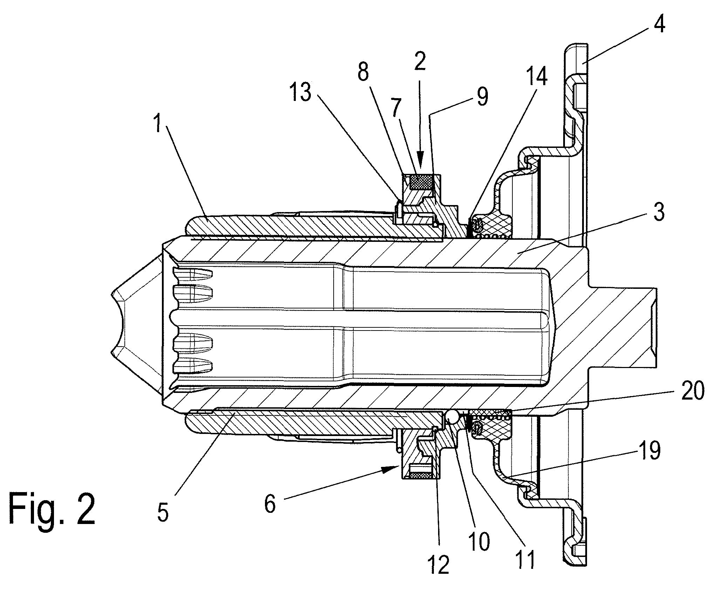

Wie insbesondere in der Figur 2 sehr deutlich zu erkennen ist, ist das Treibrad 6 zweiteilig ausgebildet und besteht aus einem Innenrad 9, in dem die Anschläge 10 gehalten sind, sowie einem Außenrad 8, in das das Zugmittel 7 formschlüssig eingreift.

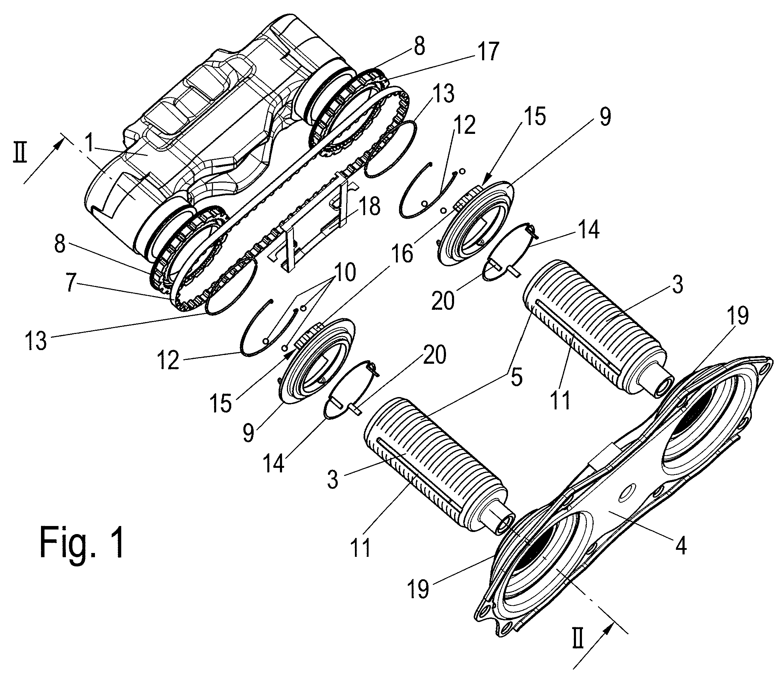

Das Innenrad 9 weist axial vorstehende, über den Umfang gleichmäßig verteilte Laschen 15 auf, jeweils mit einer Außenverzahnung 16 (Figur 1), die in eine Innenverzahnung 17 des Außenrades 8 eingreifen, so dass bei einer Vormontage der Synchronisiereinrichtung 2 eine sehr genaue Einstellung der Stellspindeln 3 zueinander möglich ist.

Zur axialen Verschiebesicherung des Treibrades 6 ist sowohl an der dem Innenrad 9 abgewandten Stirnseite ein anliegender Klemmring 13 wie auch gegenüberliegend eine Klammer 12 vorgesehen, die an der Brücke 1 formschlüssig gehalten ist und am Treibrad 6 angreift. Die bereits erwähnten Zungen 20 der Dichtung 14 liegen dichtend in jeweils einer Axialnut 11 ein. Mit einem Spanner 18, der an zumindest einem Trum des Zugmittels 7 anliegt, ist dieses unter Spannung gehalten.

### Bezugszeichenliste

- 1: Brücke
- 2: Synchronisiereinrichtung
- 3: Stellspindel
- 4: Verschlussplatte
- 5: Gewinde
- 6: Treibrad
- 7: Zugmittel
- 8: Außenrad
- 9: Innenrad
- 10: Anschlag
- 11: Axialnut
- 12: Klammer
- 13: Klemmring
- 14: Dichtung
- 15: Lasche
- 16: Außenzähne
- 17: Innenzähne
- 18: Spanner
- 19: Balg
- 20: Zunge

## Patentansprüche

1. Scheibenbremse für ein Nutzfahrzeug mit
a) einem eine Bremsscheibe übergreifenden Bremssattel,
b) einer im Bremssattel angeordneten Zuspanneinrichtung zum Andrücken von Bremsbelägen an die Bremsscheibe,
c) mindestens einer Stellspindel (3), die in einer Brücke (1) an der die Zuspanneinrichtung angreift, mittels eines Korrespondenzgewindes verdrehbar gelagert sind,
d) einer im Bremssattel positionierten Nachstelleinrichtung, mit der über eine axiale Verstellung der Stellspindeln (3) eine verschleißbedingte Änderung eines Lüftspiels zwischen dem Bremsbelag und der Bremsscheibe im Wesentlichen ausgleichbar ist,
**dadurch gekennzeichnet, dass**
e) die Stellspindel (3) außenseitig mindestens eine in Richtung der Zuspanneinrichtung in ihrer Länge begrenzte Axialnut (11) aufweist, in die ein gegenüber der Brücke (1) axial festgesetzter Anschlag (10) relativ verschiebbar eingreift.

2. Scheibenbremse nach Anspruch 1, **dadurch gekennzeichnet, dass** die Stellspindel (3) mehrere, parallel und abständig zueinander angeordnete Axialnuten (11) aufweist.

3. Scheibenbremse nach Anspruch 1 oder 2, **dadurch gekennzeichnet, dass** die Axialnuten (11) in gleichem Winkelabstand zueinander angeordnet sind.

4. Scheibenbremse nach einem der vorhergehenden Ansprüche, **dadurch gekennzeichnet, dass** der Anschlag (10) aus einer Kugel, Passfeder oder dergleichen besteht.

5. Scheibenbremse nach einem der vorhergehenden Ansprüche, **dadurch gekennzeichnet, dass** der Anschlag (10) mit der Stellspindel (3) gegenüber der Brücke (1) verdrehbar ist.

6. Scheibenbremse nach einem der vorhergehenden Ansprüche, **dadurch gekennzeichnet, dass** der Anschlag (10) an einem Treibrad (6) einer Synchroneinrichtung (2), mit dem zwei Stellspindeln (3) synchron verstellbar sind, angeordnet ist.

7. Scheibenbremse nach einem der vorhergehenden Ansprüche, **dadurch gekennzeichnet, dass** die Axialnut (11) in ihrer Länge derart begrenzt ist, dass sie lediglich so weit aus der Brücke (1) herausdrehbar ist, bis der Bremsbelag in Bremsstellung mit einer Minimaldicke eines Reibbelages an der Bremsscheibe anliegt.

8. Scheibenbremse nach einem der Ansprüche 6 oder 7, **dadurch gekennzeichnet, dass** die Synchronisiereinrichtung (2) auf der dem Bremsbelag zugewandten Seite der Brücke (1) angeordnet ist.

9. Scheibenbremse nach einem der Ansprüche 6 bis 8, **dadurch gekennzeichnet, dass** das Treibrad (6) verdrehbar, jedoch axial gesichert an der Brücke (1) gelagert ist.

## Claims

1. Disc brake for a commercial vehicle, having
a) a brake calliper which engages over a brake disc,
b) a brake application device which is arranged in the brake calliper and which serves for pressing brake pads against the brake disc,
c) at least one adjustment spindle (3) which is rotatably mounted, by means of a corresponding thread, in a bridge (1) on which the brake application device engages,
d) a readjustment device which is positioned in the brake calliper and by means of which a wear-induced change in the air gap between the brake pad and the brake disc can be substantially compensated by way of an axial adjustment of the adjustment spindles (3),
**characterised in that**
e) the adjustment spindle (3) has, on the outer side, at least one axial groove (11) which is limited in its length in the direction of the brake application device and into which a stop (10) which is axially fixed with respect to the bridge (1) engages in a relatively displaceable manner.

2. Disc brake according to claim 1, **characterised in that** the adjustment spindle (3) has a plurality of axial grooves (11) arranged parallel to and spaced apart from one another.

3. Disc brake according to claim 1 or 2, **characterised in that** the axial grooves (11) are arranged at uniform angular intervals with respect to one another.

4. Disc brake according to one of the preceding claims, **characterised in that** the stop (10) is composed of a ball, feather key or the like.

5. Disc brake according to one of the preceding claims, **characterised in that** the stop (10) is rotatable with the adjustment spindle (3) relative to the bridge (1).

6. Disc brake according to one of the preceding claims, **characterised in that** the stop (10) is arranged on a driving wheel (6) of a synchronizing device (2), by means of which two adjustment spindles (3) can be adjusted synchronously.

7. Disc brake according to one of the preceding claims, **characterised in that** the axial groove (11) is limited in its length such that it can be screwed out of the bridge (1) only as far as a point at which the brake pad, in a braking position, bears with a minimum thickness of a friction lining against the brake disc.

8. Disc brake according to one of claims 6 or 7, **characterised in that** the synchronizing device (2) is arranged on the side of the bridge (1) facing towards the brake pad.

9. Disc brake according to one of claims 6 to 8, **characterised in that** the driving wheel (6) is mounted in a rotatable but axially secured manner on the bridge (1).

## Revendications

1. Frein à disque pour un véhicule utilitaire, comprenant :
(a) un étrier de frein chevauchant un disque de frein,
(b) un moyen de serrage du frein, disposé dans ledit étrier de frein afin de presser des garnitures de frein contre ledit disque de frein,
(c) au moins une broche de réglage (3) montée de manière pivotante, moyennant un filet correspondant, dans un pont (1), auquel ledit moyen de serrage du frein s'engage,
(d) un moyen de rattrapage positionné dans ledit étrier de frein, qui permet essentiellement la compensation d'une variation d'un jeu entre ladite garniture de frein et ledit disque de frein, en raison de l'usure, par un réglage axial desdites broches de réglage (3),
**caractérisé en ce**
(e) **que** ladite broche de réglage (3) comprend, du côté extérieur, au moins une rainure axiale (11) à une longueur limitée le long de la direction de serrage du frein, dans laquelle un arrêt (10) fixé axialement en opposition audit pont (1), à déplacement relatif.

2. Frein à disque selon la revendication 1, **caractérisé en ce que** ladite broche de réglage (3) comprend une pluralité des rainures axiales (11) disposées en parallèle et à un écart l'une de l'autre.

3. Frein à disque selon la revendication 1 ou 2, **caractérisé en ce que** lesdites rainures axiales (11) sont disposées aux écarts angulaires égaux l'une par rapport à l'autre.

4. Frein à disque selon une quelconque des revendications précédentes, **caractérisé en ce que** ledit arrêt (10) consiste en une sphère, une clavette ou un élément similaire.

5. Frein à disque selon une quelconque des revendications précédentes, **caractérisé en ce que** ledit arrêt est pivotable moyennant ladite broche de réglage (3) par rapport audit pont (1).

6. Frein à disque selon une quelconque des revendications précédentes, **caractérisé en ce que** ledit arrêt (10) est disposé à une roue motrice (6) d'un mécanisme de synchronisation (2), moyennant laquelle on peut régler deux broches de réglage (3) de manière synchrone.

7. Frein à disque selon une quelconque des revendications précédentes, **caractérisé en ce que** ladite rainure axiale (11) a une longueur limitée de telle façon, qu'on ne peut la tourner en dehors dudit pont (1) que par une longueur jusqu'que ladite garniture de frein porte contre le ledit disque de frein à une épaisseur minimale d'une garniture de friction.

8. Frein à disque selon une quelconque des revendications 6 ou 7, **caractérisé en ce que** ledit mécanisme de synchronisation (2) est disposé au côté dudit pont (1), qui se trouve en face de ladite garniture de frein.

9. Frein à disque selon une quelconque des revendications 6 à 8, **caractérisé en ce que** ladite roue motrice (6) est monté de façon pivotante, mais sécurisée en sens axial audit pont.
